(19) Europäisches Patentamt
European Patent Office
Office européen des brevets

(11) **EP 1 780 591 A1**

(12) **EUROPEAN PATENT APPLICATION**
published in accordance with Art. 158(3) EPC

(43) Date of publication:
**02.05.2007 Bulletin 2007/18**

(51) Int Cl.:
**G02F 1/17** (2006.01)    **G02F 1/167** (2006.01)
**G09G 3/20** (2006.01)    **G09G 3/34** (2006.01)

(21) Application number: **05780355.3**

(22) Date of filing: **19.08.2005**

(86) International application number:
**PCT/JP2005/015142**

(87) International publication number:
**WO 2006/019159 (23.02.2006 Gazette 2006/08)**

(84) Designated Contracting States:
**DE FR**

(30) Priority: **20.08.2004 JP 2004240622**

(71) Applicant: **Bridgestone Corporation
Tokyo 104-8340 (JP)**

(72) Inventors:
• **MASUTANI, Maki, c/o BRIDGESTONE
CORPORATION
Kodaira-shi, Tokyo 187-8531 (JP)**

• **NIHEI, Norio, c/o BRIDGESTONE CORPORATION
Kodaira-shi, Tokyo 187-8531 (JP)**
• **TSUCHIE, Shuhei, c/o BRIDGESTONE
CORPORATION
Kodaira-shi, Tokyo 187-8531 (JP)**

(74) Representative: **Whalley, Kevin
Marks & Clerk
90 Long Acre
London WC2E 9RA (GB)**

(54) **INFORMATION DISPLAY SYSTEM**

(57)    The information display system has: a display panel portion 100, in which display media are sealed in a closed space between opposed two substrates, at least one substrate being transparent, and, in which the display media, to which an electrostatic filed is applied, are made to move so as to display information such as an image; and a control CPU 101 constantly connected to the display panel portion 100. In the control CPU, a driving program is installed, and, in the case that displayed information on the display panel portion 100 is continuously displayed without varying for more than a predetermined time (for example, one day or one week), an action, such that the displayed information is changed back to an original display information after making even or reversing an electric field distribution of the display media, is performed at least one time. Thereby, the information display system suitable for an electric POP such as an electric shelf label is provided, in which driving characteristics are not affected, even if the same information is continuously displayed for a long time.

# FIG. 1

EP 1 780 591 A1

**Description**

TECHNICAL FIELD

The present invention relates to an information display system used as an electric POP (point of purchase advertising) such as an electric shelf label and so on, which can repeatedly display and delete information such as an image in accordance with a migration of electrophoretic particles in a liquid or a flight/movement of particles utilizing for example Coulomb's force.

BACKGROUND ART

An information display panel used for the information display system mentioned above displays information such as an image by moving display media, to which an electrostatic field is directly applied, due to Coulomb's force, and thus has an information memory property of for example displayed image and an excellent contrast property.
However, in the case that the same information is continuously displayed for a long time in the information display panel of the information display system mentioned above, charge characteristics are varied due to environmental variations or driving load, and there is a fear that driving characteristics of the information display panel are adversely affected.

DISCLOSURE OF INVENTION

The present invention has for its object to provide an information display system, in which the driving characteristics are not adversely affected even in the case that the same information is continuously displayed for a long time.
According to the invention, an information display system utilizing an information display panel, in which display media are sealed in a closed space between opposed two substrates, at least one substrate being transparent, and, in which the display media, to which an electrostatic filed is applied, are made to move so as to display information such as an image, is characterized in that, in the case that displayed information (display information) is continuously displayed without varying for more than a predetermined time, an action, such that the displayed information is changed back to an original display information after making even or reversing an electric field distribution of the display media, is performed at least one time.
In the present invention, in the case that the displayed information (display information) is continuously displayed without varying for more than a predetermined time, the action, such that the displayed information is changed back to an original display information after making even or reversing an electric field distribution of the display media, is performed at least one time. Therefore, the charge characteristics of the display media are not varied even if there exists the environmental variations or the driving load, and thus the driving characteristics of the information display panel are not adversely affected.
Moreover, the display media used for the information display panel may be constructed by the particles or the liquid powders so as to make two groups of display media having different colors and different charge characteristics. If the electric POP such as electric shelf label is constructed by utilizing the information display panel according to the invention, the information display system such as an electric shelf label system and an electric POP system may be provided.

BRIEF DESCRIPTION OF DRAWINGS

    [Fig. 1] Fig. 1 is a schematic view showing one embodiment of the information display system according to the invention.
    [Fig. 2] Fig. 2 is a graph illustrating a relation of a time on displayed state - contrast ratio in the information display panel.
    [Fig. 3] Figs. 3a and 3b are schematic views respectively depicting an example of a reverse image of the displayed image.
    [Fig. 4] Figs. 4a and 4b are schematic views respectively showing an example of a solid image.
    [Fig. 5] Fig. 5 is a flowchart illustrating a part of processing of a display portion control device.
    [Fig. 6] Figs. 6a - 6c are schematic views respectively depicting one embodiment of a display element used in the information display panel according to the invention and its display drive theory.
    [Fig. 7] Figs. 7a and 7b are schematic views respectively showing one embodiment of the information display panel according to the invention, in which the display elements are arranged in a matrix form.
    [Fig. 8] Fig. 8 is a schematic view illustrating one embodiment of a shape of the partition walls in the information display panel according to the invention.
    [Fig. 9] Figs. 9a and 9b are schematic views respectively depicting another embodiment of the information display system according to the invention.

BEST MODE FOR CARRYING OUT THE INVENTION

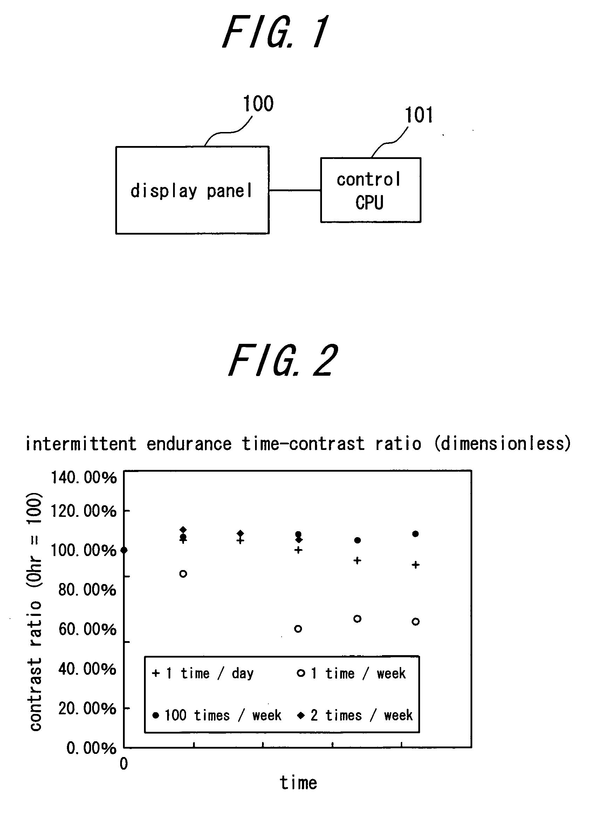

Hereinafter, the best mode for carrying out the information display system according to the invention will be explained in detail with reference to the drawings. Fig. 1 is a schematic view showing one embodiment of the information display system according to the invention. The information display system of Fig. 1 explained later in detail comprises: an information display panel 100, in which display media are sealed in a closed space between opposed two substrates, at least one substrate being transparent, and, in which the display media, to which an electrostatic filed is applied, are made to move so as to display information; and a control CPU 101 constantly connected to the information display panel 100. In the control CPU 101, a driving program explained later is installed, and, in the case that displayed information on the information display panel 100 is continuously displayed without varying for more than a predetermined time (for example, one day or one week), an action, such that the displayed information is changed back to an original display information after making even or reversing an electric field distribution of the display media, is performed at least one time.

In the information display system shown in Fig. 1, a constant connection between the information display panel 100 and the control CPU 101 is performed by wire, but it may be performed by wireless. Moreover, an integrated information display system, in which the control CPU 101 is installed in the information display panel 100, may be used.

Fig. 2 is a graph illustrating a relation of a time on displayed state - contrast ratio in the information display panel. In Fig. 2, contrast variations with respect to a time, in the case that the displayed information is rewritten by driving the display media in a reverse manner at 1 time/day, 1 time/week, 100 times/week and 2 times/week, are shown. As shown in Fig. 2, in the case that the same information is continuously displayed for a long time, charge characteristics are varied due to environmental variations or driving load, and a contrast ratio is decreased due to a rewrite frequency of the displayed information. Therefore, there is a fear that driving characteristics of the information display panel are adversely affected.

According to the invention, in order to reduce the adverse affection mentioned above, firstly, it is effective that, in the case that the displayed image is continuously displayed without varying over a predetermined time, a currently displayed white/black pattern (for example) is once reversed to forcibly display "reverse image of the displayed image". Secondly, in the case that the image is continuously displayed without varying, e.g., in the case that a power is OFF, it is necessary to maintain a state of "solid image display", which does not generate a difference of mobility of the display media (burn-in) due to a difference of adhesion state with respect to the substrate after a long time display.

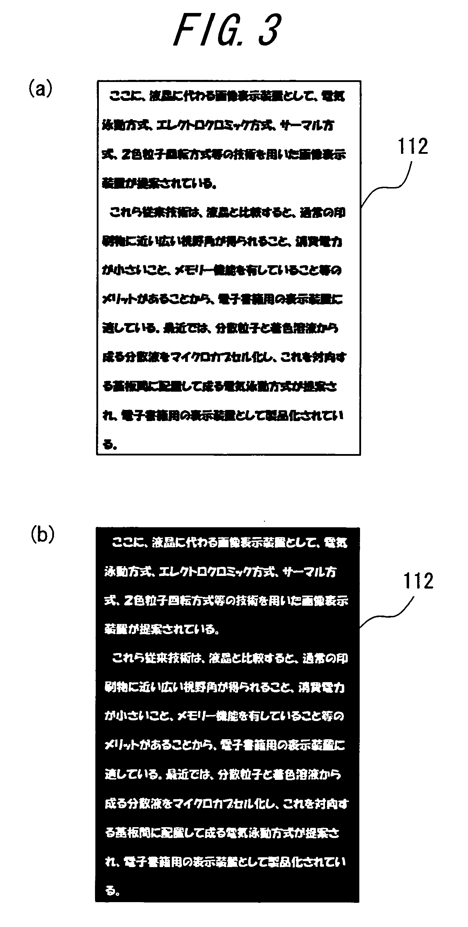

In order to prevent such a burn-in phenomenon, an electric field distribution of the display media is varied, and processes for displaying "reverse image of the display media" and "solid image" are performed. The process for displaying "reverse image of the display media" is that a white/black pattern of the currently displayed image as shown in Fig. 3a is reversed to obtain "reverse image of the display media" as shown in Fig. 3b by applying reverse voltage with respect to the currently applied voltage to all the wires both at a high voltage side and a low voltage side. The process for displaying "solid image" is that an overall black image as shown in Fig.

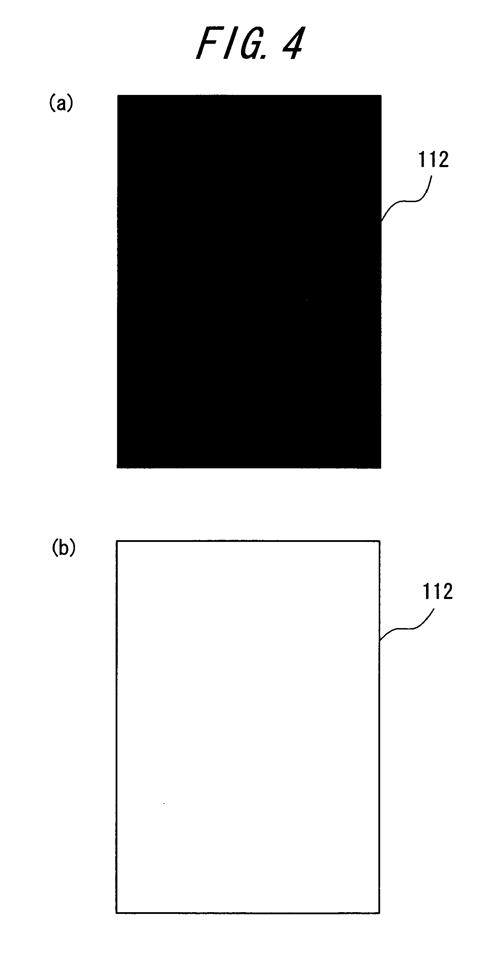

4a or an overall white image as shown in Fig. 4b is obtained by making even an electric field distribution by applying a voltage at one polarity or a voltage at the other polarity to all the wires. In this case, the same effect may be obtained by displaying display information to be displayed next other than the reverse image or the solid image as the display information.

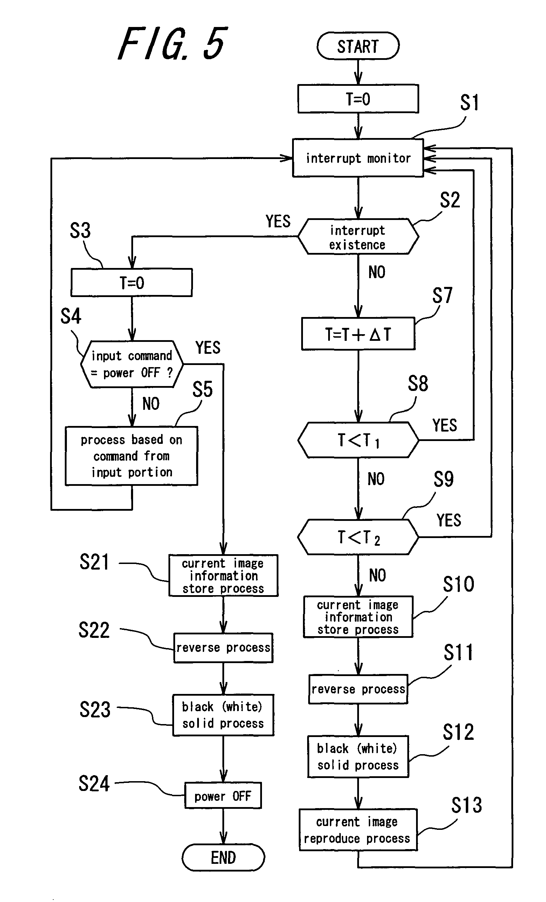

Fig. 5 is a flowchart showing a part of the process of the control CPU 101. The control CPU 101 has an interrupt monitor function for checking an input from an input portion (not shown) and also comprises a timer for measuring time duration from a time at which a last interruption is performed. The process relating to the interrupt monitor function of the control CPU 101 will be explained with reference to Fig. 5.

Firstly, the control CPU 101 performs a process (step S0) for clearing the timer to set the timer T=0, and then starts the interrupt monitor (step S1). Whether or not the interrupt is performed is checked at every predetermined time $\Delta T$ (step S2), and, in the case that the interrupt is not performed, a process for adding only $\Delta T$ to the timer time T is performed (step S7). Whether or not the timer time T after adding reaches a predetermined first set time T1 is checked (step S8), and, in the case that the timer time does not reach the first set time T1, the interrupt monitor (step S1) is repeated without performing any process.

In the step 8, in the case that the timer time reaches over the first set time T1, whether or not the timer time T reaches a predetermined second set time T2 is checked (step S9). In the case that the timer time does not reach the second set time T2, the interrupt monitor (step S1) is repeated without performing any process. In the case that the timer time reaches over the second set time T2, a process for storing current image information once in a memory 8 is performed (step S10), and then a reverse process for forming a reverse image is performed (step S11). After that, a process for displaying a black solid image or a white solid image is performed (step S12), and then a process for displaying an original image is performed (step S13). Then, a process for performing the interrupt monitor (step S1) is performed continuously.

On the other hand, in the step S2, if the interrupt is performed, a process for clearing the timer to set the timer T=0 is performed, and then a process based on a command from the input portion 4, e.g., a process for renewing the image to the other image is performed (step S5). If a command from the input portion not shown is a process for putting OFF a power source, a process for putting OFF a power source is performed (step S24), but, prior to this process, a process for storing the current image information once in the memory 8 (step S21), a reverse process for forming the reverse image (step S22) and a process for displaying the black solid image or the white solid image (step S23) are performed in this order.

In this case, when the solid image is displayed, detail process conditions may by set suitably in accordance with specifications of the display portion by performing a cycle process, wherein the black (or white) solid image is displayed, then the white (or black) solid image is displayed once and then the black (or white) solid image is displayed again, at one or more times, and by varying a time duration for performing the cycle process and a voltage applied in the cycle process in addition to the cycle process.

Moreover, the second set time T2 may be a short time during which an adverse affection is not applied to the driving characteristics of the information display panel even if the same information is continuously displayed. Further, the first set time T1 may simply be set to a time shorter than the second set time T2. These set times may be suitably set in accordance with the intended use. For example, as the second set time T2, use is made of 1 day or 1 week. Furthermore, it is possible to construct the system in such a manner that the user can change the time setting conditions.

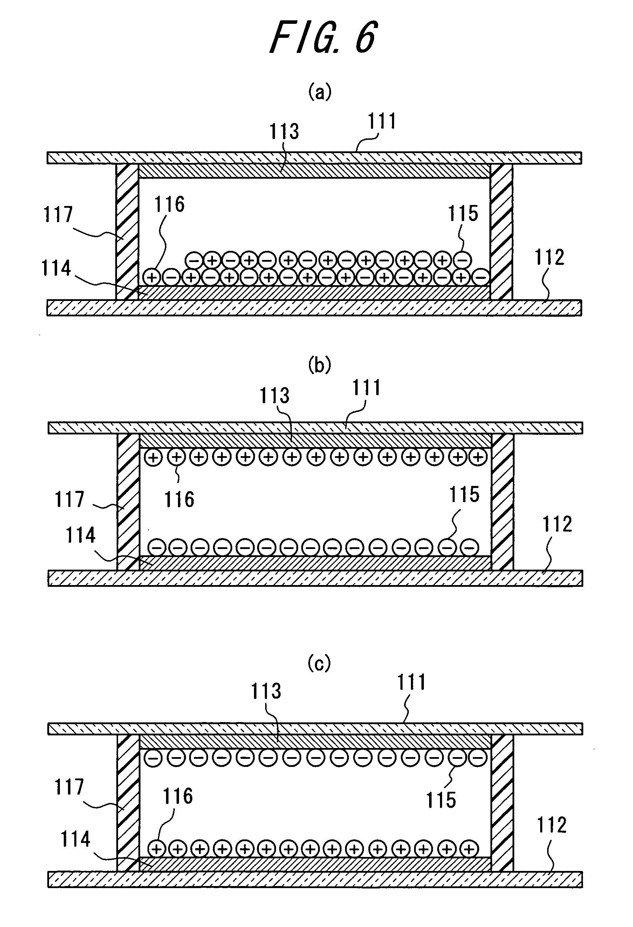

Figs. 6a - 6c are schematic views respectively showing one embodiment of information display panel according to the invention and its display drive theory. In the embodiments shown in Figs. 6a - 6c, numeral 1 is a transparent substrate, numeral 2 is an opposed substrate, numeral 3 is a display electrode (transparent electrode), numeral 4 is an opposed electrode, numeral 5 is a negatively chargeable display media, numeral 6 is a positively chargeable display media and numeral 7 is a partition wall.

Fig. 6a shows a state such that the negatively chargeable display media 5 and the positively chargeable display media 6 are arranged between opposed substrates (transparent substrate 1 and opposed substrate 2). Under such a state, when a voltage is applied in such a manner that a side of the display electrode 3 becomes low potential and a side of the opposed electrode 4 becomes high potential, as shown in Fig. 6b, the positively chargeable display media 6 fly and move to the side of the display electrode 3 and the negatively chargeable display media 5 fly and move to the side of the opposed electrode 4 by means of Coulomb's force. In this case, a display face viewed from a side of the transparent substrate 1 looks like a color of the positively chargeable display media 6. Next, when a voltage is applied in such a manner that the side of the display electrode 3 becomes high potential and the side of the opposed electrode 4 becomes low potential by reversing potentials, as shown in Fig. 6c, the negatively chargeable display media 5 fly to move to the side of the display electrode 3 and the positively chargeable display media 6 fly to move to the side of the opposed electrode 4 by means of Coulomb's force. In this case, the display face viewed from the side of the transparent substrate 1 looks like a color of the negatively chargeable display media 5.

The display states shown in Figs. 6b and 6c are repeatedly changeable only by reversing the potentials of a power source, and thus it is possible to change colors on the display face reversibly by reversing the potentials of the power source as mentioned above. The colors of the display media can be arbitrarily selected. For example, when the negatively chargeable display media 5 are yellow color and the positively chargeable display media 6 are black color, or, when the negatively chargeable display media 5 are black color and the positively chargeable display media 5 are yellow color, a reversible image display between yellow color and black color can be performed. In this method, since the display media are once adhered to the electrode by means of an imaging force, a display image can be maintained for a long time after a voltage apply is stopped, thereby showing an excellent memory property. In Fig. 6, the electrodes are arranged to inside surfaces of the substrates, but they may be arranged to outside surfaces of the substrates or may be arranged in the substrates.

In the present invention, since the chargeable display media fly and move in the gas, the response rate of the image display is extremely fast and the response rate of shorter than 1 msec may be possible. Moreover, it is not necessary to use an orientation film and a polarizing plate as the liquid crystal display, and thus it is possible to make the structure simple and to realize the image display device having a large display area at a lower cost. In addition, it is stable with respect to a temperature variation and can be used in a wide temperature range from a low temperature to a high temperature. Further, it is not affected by an angle of visual field and has a high reflection coefficient. Therefore, it is easily viewable and has low electric power consumption. Furthermore, it has an excellent memory property and thus it is not necessary to use an electric power when the image is to be maintained.

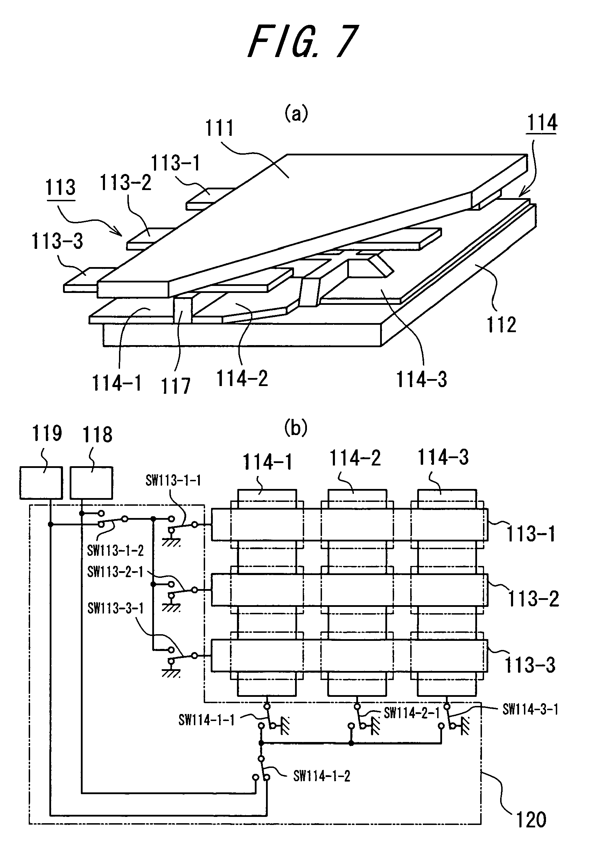

The image display panel used for the invention comprises the image display element mentioned above arranged in a matrix manner. Figs. 7a and 7b show such one embodiment respectively. In this embodiment, 3x3 matrix is shown for convenience of explanation. When the number of the electrodes is n, it is possible to construct an arbitrary nxn matrix.

In the embodiment shown in Figs. 7a and 7b, display electrodes 3-1 to 3-3 arranged substantially in parallel with each other and opposed electrodes 4-1 to 4-3 arranged substantially in parallel with each other are provided respectively on the transparent substrate 1 and the opposed substrate 2 in such a manner that they are intersected with each other. Serial switches SW3-1-1 and SW3-1-2; serial switches SW3-2-1 and SW3-2-2; and serial switches SW3-3-1 and SW3-3-2 are respectively connected to the display electrodes 3-1 to 3-3. In the same way, serial switches SW4-1-1 and SW4-1-2; serial switches SW4-2-1 and SW4-2-2; and serial switches SW4-3-2 and SW4-3-2 are respectively connected to the opposed electrodes 4-1 to 4-3.

The switches SW3-n-1 (n=1-3) and the switches SW4-n-1 (n=1-3) serve to switch the connection toward a ground level and the connection toward the next SW respectively. The switches SW3-n-2 (n=1-3) and the switches SW4-n-2 (n=1-3) serve to switch the connection toward a positive voltage generating circuit 8 and the connection toward a negative voltage generating circuit 9 respectively. These overall SWs constitute a matrix drive circuit 10. Moreover, in this embodiment, the 3x3 image display elements are constructed by isolating them by means of the partition walls 7, but the partition wall 7 is not an essential member and may be eliminated.

The operation of the matrix electrode constructed by the display electrodes 3-1 to 3-3 and the opposed electrodes 4-1 to 4-3 mentioned above is performed in such a manner that, in accordance with the image to be displayed, open/close operations of respective switches SW are controlled by means of a sequencer not shown and the 3x3 image display elements are displayed in sequence. This operation is the same as that of the known one.

In the image display device according to the first aspect of the invention having the construction mentioned above, the matrix drive circuit 10 applies positive potential $V_H$ and negative potential $V_L$ to the respective electrodes in the matrix electrode at any time in accordance with image data to be displayed. A difference between the positive potential $V_H$ and the negative potential $V_L$ may be preferably set to 200 V or less. An intermediate potential $V_0$ may be preferably set to an intermediate value therebetween, and normally set to a ground potential. However, the intermediate potential $V_0$ may be set to a constant potential near the ground potential, an average potential between $V_H$ and $V_L$, or, a potential varying in accordance with $V_H$ and $V_L$. Applications of the positive potential and the negative potential may be performed by a direct current or a current in which an alternating current is superimposed on the direct current.

In the other embodiment, the switches SW3-n-1 (n=1-3) and the switches SW4-n-1 (n=1-3) serve to switch the connection toward a ground level and the connection toward the next SW respectively. The switches SW3-n-2 (n=1-3) and the switches SW4-n-2 (n=1-3) serve to switch the connection toward a high voltage generating circuit 8 and the connection toward an intermediate voltage generating circuit 9 respectively. These overall SWs constitute a matrix drive circuit 10. Moreover, in this embodiment, the 3x3 image display elements are constructed by isolating them by means of the partition walls 7, but the partition wall 7 is not an essential member and may be eliminated.

The operation of the matrix electrode constructed by the display electrodes 3-1 to 3-3 and the opposed electrodes 4-1 to 4-3 mentioned above is performed in such a manner that, in accordance with the image to be displayed, open/close operations of respective switches SW are controlled by means of a sequencer not shown and the 3x3 image display elements are displayed in sequence. This operation is the same as that of the known one.

In the image display device according to the first aspect of the invention having the construction mentioned above, the matrix drive circuit 10 applies high potential $V_H$ and intermediate potential $V_L$ to the respective electrodes in the matrix electrode at any time in accordance with image data to be displayed. Applications of the positive potential and the negative potential may be performed by a direct current or a current in which an alternating current is superimposed on the direct current. An intermediate potential $V_L$ may be preferably set to an intermediate value therebetween, and may be set to a constant potential, an average potential between $V_H$ and $V_L$, or, a potential varying in accordance with $V_H$ and $V_L$.

The embodiment shown in Fig. 7 shows the case wherein respective electrodes under non-driven state are connected to a ground potential by performing a switching operation by means of SW made of mechanical relay. However, the switching operation may be performed by SW utilizing a semiconductor element. Moreover, the electrodes may be connected to a ground potential via a fixed resistor.

Hereinafter, respective members constituting the information display panel used in the information display system according to the invention will be explained. As the substrate, at least one of the substrates is the transparent substrate 1 through which a color of the display media can be observed from outside of the information display panel, and it is preferred to use a material having a high transmission factor of visible light and an excellent heat resistance. The substrate 2 may be transparent or may be opaque. Examples of the substrate material include polymer sheets such as polyethylene terephthalate, polyethylene naphthalate, polyether sulfone, polyethylene, polycarbonate, polyimide or acryl and metal sheets having flexibility and inorganic sheets such as glass, quartz or so having no flexibility. The thickness of the substrate is preferably 2 to 5000 $\mu$m, more preferably 5 to 2000 $\mu$m. When the thickness is too thin, it becomes difficult to maintain strength and distance uniformity between the substrates, and when the thickness is thicker than 5000 $\mu$m, there is a drawback as a thin-type information display panel.

As a material of the electrode, use is made of metals such as aluminum, silver, nickel, copper, gold, or, conductive metal oxides such as ITO, indium oxide, conductive tin oxide, conductive zinc oxide and so on, or, conductive polymers such as polyaniline, polypyrrole, polythiophene and so on, and they are used by being suitably selected. As an electrode forming method, use is made of a method in which the materials mentioned above are made to a thin film by means of sputtering method, vacuum vapor deposition method, CVD (chemical vapor deposition) method, coating method and so on, or, a method in which conductive materials and solvents are mixed with synthetic resin binder and the mixture is sprayed. A transparency is necessary for the electrode arranged to the substrate at an observation side (display surface side), but it is not necessary to the substrate at a rear side. In both cases, the materials mentioned above, which are transparent and have a pattern formation capability, can be suitably used. Additionally, the thickness of the electrode may be suitable unless the electro-conductivity is absent or any hindrance exists in optical transparency, and it is preferable to be 3 to 1000 nm, more preferable to be 5 to 400 nm. The material and the thickness of the electrode arranged to the rear substrate are the same as those of the electrode arranged to the substrate at the display side, but transparency is not necessary. In this case, the applied outer voltage may be superimposed with a direct current or an alternate current.

As the partition wall arranged according to need, a shape of the partition wall is suitably designed in accordance with a kind of the display media used for the display and is not restricted. However, it is preferred to set a width of the partition wall to 2 - 100 $\mu$m more preferably 3 - 50 $\mu$m and to set a height of the partition wall to 10 - 500 $\mu$m more preferably 10 - 200 $\mu$m. Moreover, as a method of forming the partition wall, use may be made of a double rib method wherein ribs are formed on the opposed substrates respectively and they are connected with each other and a single rib method wherein a rib is formed on one of the opposed substrates only. The present invention may be preferably applied to both methods mentioned above.

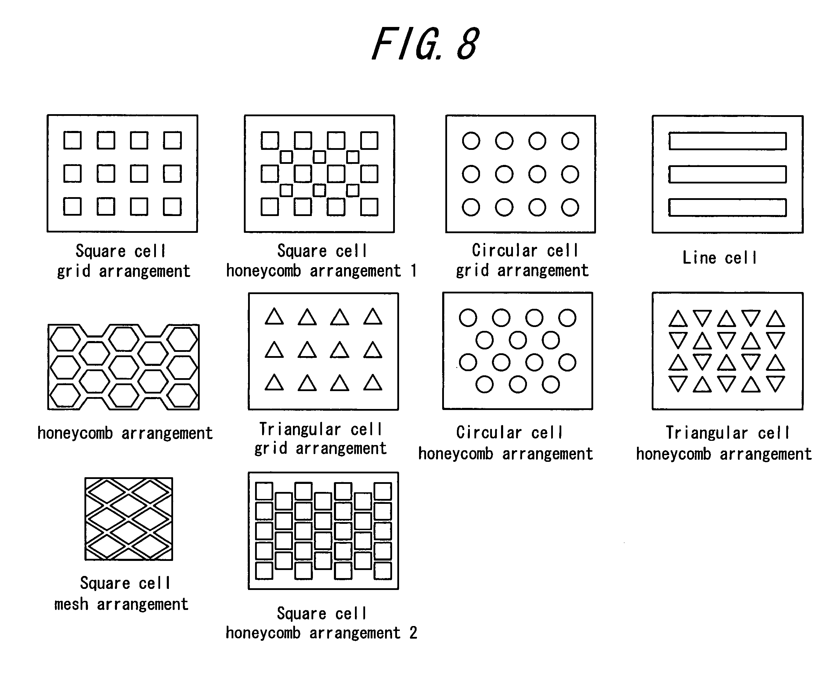

The cell formed by the partition walls each made of rib has a square shape, a triangular shape, a line shape, a circular shape and a hexagon shape, and has an arrangement such as a grid, a honeycomb and a mesh, as shown in Fig. 8 viewed from a plane surface of the substrate. It is preferred that the portion corresponding to a cross section of the partition wall observed from the display side (an area of the frame portion of the cell) should be made as small as possible. In this case, a clearness of the image display can be improved. The formation method of the partition wall is not particularly restricted, however, a die transfer method, a screen-printing method, a sandblast method, a photolithography method and an additive method. Among them, it is preferred to use a photolithography method using a resist film or a die transfer method. The present invention may be preferably applied to both methods mentioned above.

Then, liquid powders as the display media used in the information display panel according to the invention will be explained. It should be noted that a right of the name of liquid powders as the display media of the invention is granted to the applicant as "liquid powders (Registered)".

In the present invention, a term "liquid powders" means an intermediate material having both of liquid properties and particle properties and exhibiting a self-fluidity without utilizing gas force and liquid force. Preferably, it is a material having an excellent fluidity such that there is no repose angle defining a fluidity of powder. For example, a liquid crystal is defined as an intermediate phase between a liquid and a solid, and has a fluidity showing a liquid characteristic and an anisotropy (optical property) showing a solid characteristic (Heibonsha Ltd.: encyclopedia). On the other hand, a definition of the particle is a material having a finite mass if it is vanishingly small and receives an attraction of gravity (Maruzen Co., Ltd.: physics subject-book). Here, even in the particles, there are special states such as gas-solid fluidized body and liquid-solid fluidized body. If a gas is flown from a bottom plate to the particles, an upper force is acted with respect to the particles in response to a gas speed. In this case, the gas-solid fluidized body means a state that is easily fluidized when the upper force is balanced with the gravity. In the same manner, the liquid-solid fluidized body means a state that is fluidized by a liquid. (Heibonsha Ltd.: encyclopedia) In the present invention, it is found that the intermediate material having both of fluid properties and solid properties and exhibiting a self-fluidity without utilizing gas force and liquid force can be produced specifically, and this is defined as the liquid powders.

That is, as is the same as the definition of the liquid crystal (intermediate phase between a liquid and a solid), the liquid powders according to the invention are a material showing the intermediate state having both of liquid properties and particle properties, which is extremely difficult to receive an influence of the gravity showing the particle properties mentioned above and indicates a high fluidity. Such a material can be obtained in an aerosol state i.e. in a dispersion system wherein a solid-like or a liquid-like material is floating in a relatively stable manner as a dispersant in a gas, and thus, in the information display panel according to the invention, a solid material is used as a dispersant.

The information display panel which is a target of the present invention has a construction such that the liquid powders composed of a solid material stably floating as a dispersoid in a gas and exhibiting a high fluidity in an aerosol state are sealed between opposed two substrates, wherein one of two substrates is transparent. Such liquid powders can be made to move easily and stably by means of Coulomb's force and so on generated by applying a low voltage. As mentioned above, the liquid powders means an intermediate material having both of liquid properties and particle properties and exhibiting a self-fluidity without utilizing gas force and liquid force. Such liquid powders become particularly an aerosol state. In the information panel according to the invention, the liquid powders used in a state such that a solid material is relatively and stably floating as a dispersoid in a gas.

Then, the particles as the display media used in the information display panel according to the invention will be explained. The particles may be composed of resins as a main ingredient, and can include according to need charge control agents, coloring agent, inorganic additives and so on as is the same as the known one. Hereinafter, typical examples of resin, charge control agent, coloring agent, additive and so on will be explained.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. Two kinds or more of these may be mixed and used. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds and colors of organic or inorganic pigments or dye as will be described below are employable.

Examples of black pigments include carbon black, copper oxide, manganese dioxide, aniline black, and activate carbon.

Examples of blue pigments include C.I. pigment blue 15: 3, C.I. pigment blue 15, Berlin blue, cobalt blue, alkali blue lake, Victoria blue lake, phthalocyanine blue, metal-free phthalocyanine blue, partially chlorinated phthalocyanine blue, first sky blue, and Indanthrene blue BC.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, and C.I. pigment red 2.

Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, tartrazinelake, and C.I. pigment yellow 12.

Examples of green pigments include chrome green, chromium oxide, pigment green B, C.I. pigment green 7,Malachite green lake, and final yellow green G.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I. pigment orange 31.

Examples of purple pigments include manganese purple, first violet B, and methyl violet lake.

Examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Pressian blue, Armenian blue, cobalt blue, cobalt green, cobalt violet, ion oxide, carbon black, manganese ferrite black, cobalt ferrite black, copper powder, aluminum powder.

These coloring agents and inorganic additives may be used alone or in combination of two or more kinds thereof. Particularly, carbon black is preferable as the black coloring agent, and titanium oxide is preferable as the white coloring agent.

Moreover, as the average particle diameter d (0.5) of the particles to be used, it is preferred to set d (0.5) to 0.1 - 50 $\mu$m and to use even particles. If the average particle diameter d(0.5) exceeds this range, the image clearness sometimes deteriorated, and, if the average particle diameter is smaller than this range, an agglutination force between the particles becomes too large and the movement of the particles is prevented.

Further, it is preferred that particle diameter distribution Span of the particles, which is defined by the following formula, is less 5 preferably less than 3:

$$\mathbf{Span} = (\mathrm{d}(0.9) - \mathrm{d}(0.1))/\mathrm{d}(0.5) ;$$

(here, d(0.5) means a value of the particle diameter expressed by $\mu$m wherein an amount of the particles having the particle diameter larger than or smaller than this value is 50%, d(0.1) means a value of the particle diameter expressed by $\mu$m wherein an amount of the particles having the particle diameter smaller than this value is 10%, and d(0.9) means a value of the particle diameter expressed by $\mu$m wherein an amount of the particles having the particle diameter smaller than this value is 90%).

If the particle diameter distribution Span of the particles is set to not more than 5, the particle diameter becomes even and it is possible to perform an even particle movement.

Furthermore, as a correlation between the particles, it is preferred to set a ratio of d(0.5) of the particles having smallest diameter with respect to d(0.5) of the particles having largest diameter to not more than 50 preferably not more than 10.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution.

In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

A charge amount of the display media properly depends upon the measuring condition. However, it is understood that the charge amount of the display media used for the display media in the information display panel substantially depends upon an initial charge amount, a contact with respect to the partition wall, a contact with respect to the substrate, a charge decay due to an elapsed time, and specifically a saturation value of the particles for the display media during a charge behavior is a main factor.

Further, in the present invention, it is important to control a gas in a gap surrounding the display media (particles and liquid powders) between the substrates, and a suitable gas control contributes an improvement of display stability. Specifically, it is important to control a humidity of the gap gas to not more than 60% RH at 25°C, preferably not more than 50% RH, more preferably not more than 35% RH.

The above gap means a gas portion surrounding the display media obtained by substituting the electrodes (in the case of arranging the electrode inside of the substrates), an occupied portion of the display media (particles or liquid powders), an occupied portion of the partition walls (in the case of arranging the partition wall) and a seal portion of the information display panel from the space between the opposed substrates.

A kind of the gap gas is not limited if it has the humidity mentioned above, but it is preferred to use dry air, dry nitrogen gas, dry argon gas, dry helium gas, dry carbon dioxide gas, dry methane gas and so on. It is necessary to seal this gas in the device so as to maintain the humidity mentioned above. For example, it is important to perform the operations of filling the particles or liquid powders and assembling the substrate under an atmosphere having a predetermined humidity and to apply a seal member and a seal method for preventing a humidity inclusion from outside of the device.

In the information display panel according to the invention, an interval between the substrates is not restricted if the display media can be moved and a contrast can be maintained, and it is adjusted normally to 10 - 500 μm, preferably 10 - 200 μm.

Moreover, it is preferred to control a volume occupied rate of the display media in a space between the opposed substrates to 5 - 70 %, more preferably 5 - 60 %. If the volume occupied rate of the particles or the liquid powders exceeds 70 %, the display media become difficult to move, and if it is less than 5 %, a sufficient contrast cannot be obtained and a clear image display is not performed.

The present invention is not limited to the embodiments mentioned above, and various alterations and modifications are possible.

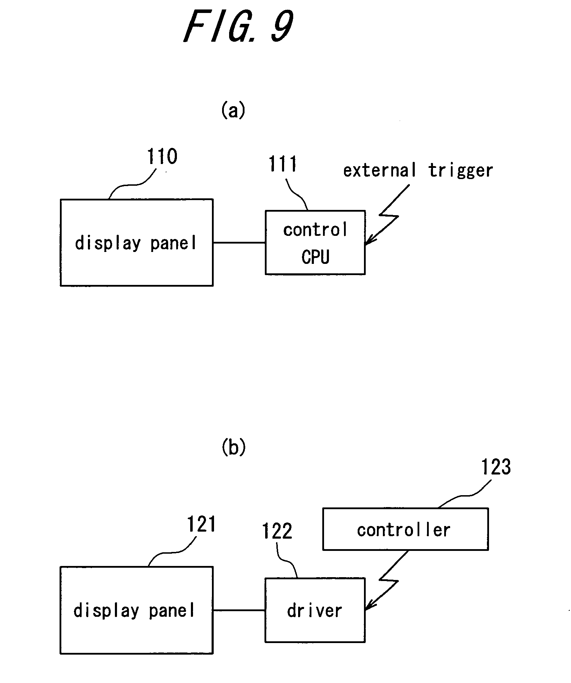

For example, as the information display system, use is made of a system (Fig. 9a), in which a scanning operation is started when an external trigger (including infrared, light and so on) is transmitted to a control CPU 111 constantly connected to an information display panel 110, or, a system (Fig. 9b), in which, information data and driving program are installed in a controller 123, to which a driver 122 constantly connected to an information display panel 121 is connected in a wireless manner or constantly connected manner, and predetermined information is transmitted at several timed when time is up.

In the embodiments mentioned above, white / black two color combination is explained, but an arbitrary combination of dark color / pale color may be used. Moreover, a color display may be performed by using a color filter.

In the embodiments mentioned above, the information display panel comprising a matrix electrode pair constituted by intersecting the display electrodes and the opposed electrodes with each other, but use may be made of an information display panel comprising a matrix electrode pair in which electrode pairs are arranged in a matrix manner.

EMBODIMENTS

<Example 1>

In the system shown in Fig. 9b, a display operation was performed at 1 time/day. As a result, the endurance data shown in Fig. 2 were obtained.

<Example 2>

In the system shown in Fig. 9b, a display operation was performed at 100 times/week. As a result, the endurance data shown in Fig. 2 were obtained.

<Comparative example>

In the system shown in Fig. 9b, a display operation was performed at 1 time/week. As a result, the endurance data shown in Fig. 2 were obtained.

INDUSTRIALLY APPLICABILITY

The image display system according to the invention is applicable to the image display unit for mobile equipment such as notebook personal computers, PDAs, cellular phones, handy terminal and so on; to the electric paper for electric book, electric newspaper and so on; to the bulletin boards such as signboards, posters, blackboards and so on; to the image display unit for electric calculator, home electric application products, auto supplies and so on; to the card display unit for point card, IC card and so on; and to the display unit for electric POP, electric advertisement, electric price tag, electric shelf label, electric musical score, RF-ID device and so on.

**Claims**

1. An information display system utilizing an information display panel, in which display media are sealed in a closed space between opposed two substrates, at least one substrate being transparent, and, in which the display media, to which an electrostatic filed is applied, are made to move so as to display information such as an image, **characterized in that**, in the case that displayed information (display information) is continuously displayed without varying for more than a predetermined time, an action, such that the displayed information is changed back to an original display information after making even or reversing an electric field distribution of the display media, is performed at least one time.

2. The information display system according to claim 1, wherein information is displayed in the information display panel by providing instructions with wireless or wired connection from a position apart from the information display panel.

3. The information display system according to claim 2, further comprising a driver for driving the information display panel and a controller for controlling the driver, wherein, information such as an image to be displayed and a driving pattern, which is transmitted with wired or wireless connection from the controller positioned away, is read out, and, the information display panel is driven to renew the display by means of the driver.

4. The information display system according to claim 2, further comprising a drive control device for controlling a drive of the information display panel and an external trigger transmitter, wherein, the drive control device reads out an external trigger signal transmitted with wired or wireless connection from the external trigger transmitter positioned away, and, a display of the information display panel is renewed.

5. The information display system according to one of claims 1 - 4, wherein the display media used in the information display panel are constructed by particles and liquid powders, and, use is made of two groups of the display media having different colors and different charge characteristics.

6. The information display system according to one of claims 1 - 5, wherein the information display panel is an electronic shelf label.

7. The information display system according to one of claims 1 - 5, wherein the information display panel is an electronic POP.

# *FIG. 1*

100

101

```
┌─────────────────┐      ┌──────────┐
│                 │      │ control  │
│  display panel  │──────│   CPU    │
│                 │      │          │
└─────────────────┘      └──────────┘
```

# *FIG. 2*

intermittent endurance time-contrast ratio (dimensionless)

Legend:
+ 1 time / day      ○ 1 time / week
● 100 times / week  ◆ 2 times / week

y-axis: contrast ratio (0hr = 100)

x-axis: time

# FIG. 3

(a)

ここに、液晶に代わる画像表示装置として、電気泳動方式、エレクトロクロミック方式、サーマル方式、2色粒子回転方式等の技術を用いた画像表示装置が提案されている。

これら従来技術は、液晶と比較すると、通常の印刷物に近い広い視野角が得られること、消費電力が小さいこと、メモリー機能を有していること等のメリットがあることから、電子書籍用の表示装置に適している。最近では、分散粒子と着色溶液から成る分散液をマイクロカプセル化し、これを対向する基板間に配置して成る電気泳動方式が提案され、電子書籍用の表示装置として製品化されている。

112

(b)

ここに、液晶に代わる画像表示装置として、電気泳動方式、エレクトロクロミック方式、サーマル方式、2色粒子回転方式等の技術を用いた画像表示装置が提案されている。

これら従来技術は、液晶と比較すると、通常の印刷物に近い広い視野角が得られること、消費電力が小さいこと、メモリー機能を有していること等のメリットがあることから、電子書籍用の表示装置に適している。最近では、分散粒子と着色溶液から成る分散液をマイクロカプセル化し、これを対向する基板間に配置して成る電気泳動方式が提案され、電子書籍用の表示装置として製品化されている。

112

# FIG. 4

(a)

112

(b)

112

# FIG. 5

**Flowchart (FIG. 5):**

- START
- T=0
- **S1** interrupt monitor
- **S2** interrupt existence
  - YES → **S3** T=0 → **S4** input command = power OFF ?
    - YES → **S21** current image information store process → **S22** reverse process → **S23** black (white) solid process → **S24** power OFF → END
    - NO → **S5** process based on command from input portion → (back to interrupt monitor)
  - NO → **S7** T=T+ΔT → **S8** T<$T_1$
    - YES → (back to interrupt monitor)
    - NO → **S9** T<$T_2$
      - YES → (back to interrupt monitor)
      - NO → **S10** current image information store process → **S11** reverse process → **S12** black (white) solid process → **S13** current image reproduce process → (back to interrupt monitor)

# FIG. 6

(a)

(b)

(c)

# FIG. 7

(a)

(b)

# FIG. 8

Square cell
grid arrangement

Square cell
honeycomb arrangement 1

Circular cell
grid arrangement

Line cell

honeycomb arrangement

Triangular cell
grid arrangement

Circular cell
honeycomb arrangement

Triangular cell
honeycomb arrangement

Square cell
mesh arrangement

Square cell
honeycomb arrangement 2

EP 1 780 591 A1

# FIG. 9

(a)

(b)

## INTERNATIONAL SEARCH REPORT

| | International application No. |
|---|---|
| | PCT/JP2005/015142 |

A. CLASSIFICATION OF SUBJECT MATTER
*G02F1/17* (2006.01), *G02F1/167* (2006.01), *G09G3/20* (2006.01), *G09G3/34* (2006.01)

According to International Patent Classification (IPC) or to both national classification and IPC

B. FIELDS SEARCHED

Minimum documentation searched (classification system followed by classification symbols)
*G02F1/17* (2006.01), *G02F1/167* (2006.01), *G09G3/20* (2006.01), *G09G3/34* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-177377 A  (Optrex Corp., Asahi Glass Co., Ltd.), 27 June, 2003 (27.06.03), Full text; Figs. 1 to 12 & US 2003/0067431 A1    & EP 1296311 A & CN 1409293 A      & TW 575854 B | 1-7 |
| Y | JP 2001-228460 A  (Citizen Watch Co., Ltd.), 24 August, 2001 (24.08.01), Full text; Figs. 1 to 8 (Family: none) | 1-7 |

☐ Further documents are listed in the continuation of Box C.   ☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 04 November, 2005 (04.11.05) | 22 November, 2005 (22.11.05) |

| Name and mailing address of the ISA/ | Authorized officer |
|---|---|
| Japanese Patent Office | |
| Facsimile No. | Telephone No. |

Form PCT/ISA/210 (second sheet) (April 2005)